Europäisches Patentamt

European Patent Office

Office européen des brevets

(19)

(11) **EP 1 615 505 B1**

(12) **EUROPEAN PATENT SPECIFICATION**

(45) Date of publication and mention
of the grant of the patent:
**18.10.2006 Bulletin 2006/42**

(51) Int Cl.:
**A23F 3/16** (2006.01)

(21) Application number: **04727236.4**

(22) Date of filing: **14.04.2004**

(86) International application number:
**PCT/DK2004/000268**

(87) International publication number:
**WO 2004/091303 (28.10.2004 Gazette 2004/44)**

(54) **TEA PRODUCTION PROCESS**

VERFAHREN ZUR HERSTELLUNG VON TEE

PROCEDE DE FABRICATION DE THE

(84) Designated Contracting States:
**AT BE BG CH CY CZ DE DK EE ES FI FR GB GR
HU IE IT LI LU MC NL PL PT RO SE SI SK TR**

(30) Priority: **15.04.2003 DK 200300593**

(43) Date of publication of application:
**18.01.2006 Bulletin 2006/03**

(73) Proprietor: **Novozymes A/S
2880 Bagsvaerd (DK)**

(72) Inventor: **ZHOU, Zhiwei
Chongwen District,
Beijing 100075 (CN)**

(56) References cited:
**DE-A- 2 229 401          DE-A- 10 027 405
US-A- 5 919 500**

- **DATABASE WPI Section Ch, Derwent
  Publications Ltd., London, GB; Class D13, AN
  1975-76595W XP002285198 & JP 50 117997 A
  (TENCO BROOKE BOND LTD) 16 September 1975
  (1975-09-16)**
- **DATABASE WPI Section Ch, Derwent
  Publications Ltd., London, GB; Class D13, AN
  1999-073864 XP002285199 & JP 10 290664 A
  (SAPPORO BREWERIES LTD) 4 November 1998
  (1998-11-04)**
- **DATABASE WPI Section Ch, Derwent
  Publications Ltd., London, GB; Class D13, AN
  1976-96849X XP002285200 & JP 51 128499 A
  (MEIJIYA SHOKUHIN KO) 9 November 1976
  (1976-11-09)**
- **DATABASE WPI Section Ch, Week 200215
  Derwent Publications Ltd., London, GB; Class
  D13, AN 2002-106905 XP002285201 & CN 1 318
  308 A (GUANGDONG HUACHENG FOOD CO LTD)
  24 October 2001 (2001-10-24)**

**Description**

**FIELD OF THE INVENTION**

The present invention relates to a method comprising contacting a tea extract with a pectin lyase to produce a tea beverage or a tea concentrate, which forms little or no haze when stored at ambient or refrigeration temperatures.

**BACKGROUND OF THE INVENTION**

Instant tea beverages are typically available to the consumers as a canned or bottled, single-strength beverage ready for consumption or as a concentrate, which is diluted with water to form a drinkable tea beverage.

Tea extracts are prepared commercially by extraction of the tea leaves with hot water and then separating the aqueous tea extract from the leaves. The tea extract contains both soluble and insoluble tea solids why tea extracts often develop haze when stored at ambient temperature or under refrigeration. A tea manufacture process usually comprises a series of additional processing steps to reduce the amount of insoluble solids. Conventional methods of removing insoluble, solids are known as decreaming processes and utilize adjustment in process variables, such as temperature, to cause precipitation of solids, followed by centrifugation, filtration or other equivalent techniques to remove precipitate complexes. Also enzymatic treatment with pectinases, tannases and/or laccases etc. has been employed (e.g. US 5,919,500).

DE 2229401 describes the use of pectinase for reducing turbidity in a tea beverage.

The present invention has as its object to find an effective enzyme system for preventing formation of haze after packaging when stored at ambient or refrigeration temperatures.

**SUMMARY OF THE INVENTION**

We have found that the haze formed in packaged tea beverages when stored under ambient or refrigerated conditions can be reduced by treating the tea extract with a pure pectin lyase. The storage stability is thereby increased.

Accordingly, in a first aspect, the invention relates to a method for reduction of storage induced haze formation by at least 10 pct, 50 pct, 75 pct, 90 pct, 95 pct or particularly 99 pct in a packaged tea extract by a process comprising subjecting a tea extract to the steps of:

a) contacting the tea extract with a pectin lyase;
b) separating insoluble solids from the tea extract; and;
c) packaging the tea extract.

In a second aspect the invention relates to use of a pectin lyase for producing a tea extract with improved storage stability.

**DETAILED DESCRIPTION OF THE INVENTION**

Definitions

The term "tea extract" is understood as a aqueous extract of tea leaves, which may be fermented or unfermented tea leaves, such as black tea, oolong tea, green tea or mixtures thereof. The extraction conditions are conventional and may be carried out at atmospheric or elevated pressure where the tea leaves are contacted with water at ambient or elevated temperature to provide a tea extract. The tea extract may undergo conventional decreaming steps to remove insoluble solids as well as various treatments to enhance color or flavor. The methods for production of tea extract are known to the person skilled in the art.

The term "packaged tea beverage or concentrate" is understood as the product of a process comprising dispensing and sealing the tea extract in air tight containers such as cans, bottles, cartons or another type of container suitable for a beverage product.

Determination of storage haze

The term "haze" is understood as fine insoluble particles reducing the clarity of the tea beverage. Haze may be separated in to two types: a "cold haze" that develops following refrigeration, and a "storage haze" that develops after prolonged storage. The development of storage haze can be accelerated by incubation at 45°C. Haze reduction may be expressed as haze ("cold haze" or "storage haze") in treated tea extract relative to haze in untreated tea extract.

A tea extract having improved storage stability is defined a tea extract having a reduction in haze formation upon storage, i.e. storage induced haze and/or accelerated storage induced haze by at least 10 pct, 50 pct, 75 pct, 90 pct, 95 pct or particularly 99 compared to an untreated tea extract.

Assessments of cold haze is made using a Haze Meter or by visual examination of tea extract stored at 5°C for 12 hrs.

Assessment of storage induced haze is made using a Haze Meter or by visual examination of tea extract stored at ambient temperature for 3 months.

Assessment of accelerated storage induced haze is made using a Haze Meter or by visual examination of tea extract stored at 45°C for 1 month.

Pectin lyase

Pectin lyase (EC 4.2.2.10) catalyses eliminative cleavage of (1 → 4)-alpha-D-galacturonan methyl ester to give oligosaccharides with 4-deoxy-6-O-methyl- alpha -D-galact-4-enuronosyl groups at their non-reducing ends. Pectin lyase may be known under the names: pectin transeliminase; endo-pectin lyase; polymethylgalacturonic transeliminase; pectin methyltranseliminase; pectolyase.

According to the invention a microbial pectin lyase is preferred. The microbial pectin lyase may be derived from bacteria or fungi (including filamentous fungi and yeasts). The microbial pectin lyase is preferably obtained from a fungus. The fungus may be a strain belonging to the subdivision *Basidiomycotina* or to the subdivision *Ascomycotina.* Suitable examples include pectin lyases derivable from strains of *Aspergillus sp.* Pectin lyases derivable from strains within *A. niger or A.oryza* are preferred.

Preferably the pectin lyase applied in the present invention is a pure pectin lyase free of side activities such as pectin methylesterase, pectate lyase, and/or polygalacturonase activity and/or such as protease, phytase, amylase or lipase activity.

The pectin lyase may furthermore be one which is producible by a method comprising cultivating a host cell transformed with a recombinant DNA vector which carries a DNA sequence encoding said pectin lyase as well as DNA sequences encoding functions permitting the expression of the DNA sequence encoding the pectin lyase in a culture medium under conditions permitting the expression of the pectin lyase and recovering the pectin lyase from the culture.

A preferred for the invention is a pectin lyase derived from *Aspergillus niger,* e.g the pectin lyase described as PLA in EP353188.

Commercial pectin lyase compositions suitable for the present invention are CITROZYM PREMIUM, PECTINEX SMASH XXL, NOVOFERM P and NOVOFERM A available from Novozymes A/S.

Determination of pectin lyase activity (UPTE)

Activity of pectin lyase, (aka. pectin transeliminase) is measured in UPTE. The method is based on the enzyme's degradation of dissolved pectin, which is measured using a spectrophotometer (e.g. Hitachi 1100). One pectin transeliminase unit (UPTE) is defined as the amount of enzyme which raises absorbance by 0.01 absorbance units per minute under standard conditions: Substrate concentration 0.5% Obipectin, 30°C, pH 5.4, Reaction time 10 minutes and absorbance at 238 nm.

A citrate-phosphate buffer and a pectin substrate are used for the analysis. Citric acid buffer 0.1 M is prepared from 21.0 g citric acid ($C_6H_8O_7,H_2O$), e.g. Merck 244 and demineralized water up to 1000 mL. Dipotassium hydrogen phosphate buffer 0.1 M is prepared from 17.4 g $K_2HPO_4$ dipotassium hydrogen phosphate, e.g. Merck 5104 and demineralized water up to 1000 mL. The citrate-phosphate buffer is prepared from 290 mL 0.1 M citric acid buffer and 710 mL 0.1 dipotassium hydrogen phosphate. The pectin substrate is prepared from 0.50 g Obipectin (Braunband), 0.5 mL 96% ethanol and 50 mL 0.1 M citrate-phosphate buffer which are heated to the boiling point and stirring for 15 minutes. The solution is cooled to ambient temperature and the pH adjusted to 5.4 using 1 M NaOH. Demineralized water is added up to 100 mL.

One blind is prepared: 2.5 mL substrate is pipetted into a 10 mL test tube. The tube is heated in 30°C water bath for approx. 5 minutes. 0.5 mL demineralized water is added and the tube shaken. Absorbance is measured at 238 nm on a spectrophotometer and the blind set at zero.

The enzyme samples are diluted with demineralized water to approx. 7 UPTE/mL. 2.5 mL substrate is pipetted into a 10 mL test tube. The tube is heated in a 30°C water bath for approx. 5 minutes. 0.5 mL enzyme solution is added and the tube shaken. Absorbance is measured after exactly 10 minutes.

The pectin lyase activity is calculating using the formula;

$$\text{Activity (UPTE / g)} = \frac{\Delta \text{ Abs} \cdot V_1}{T \cdot 0.01 \cdot M \cdot V_2 \cdot 1.11}$$

wherein $\Delta\text{Abs} = \text{Abs}_{238nm}(10 \text{ mins}) - \text{Abs}_{238nm}(0 \text{ mins})$, $V_1$ = Flask volume, T = 10 mins, M = Weight of sample in g, $V_2$ = Enzyme volume, 0.01 = Increase in absorbance. A detailed description of the analytical method (EB-SM-0368.02/01) is available on request from Novozymes A/S.

Treatments

The treatment according to the invention may be performed on a conventionally produced tea extract to ensure good storage stability.

In the first aspect the tea extract is contacted with a pectin lyase. Temperature during incubation may be maintained at 0 to 100°C, or 20 to 80°C, or 30 to 60°C, or particularly 40 to 50°C. Incubation may be effected for 1 min to 10 hours, or for 10 min to 5 hours, or for 20 min to 2 hours, or for 45 minutes to 1½ hours, and at least for a time sufficient to allow the pectin lyase catalysised reactions to proceed until storage induced haze and/or accelerated storage induced haze is reduced to less than 50 pct, or 40 pct, or 30 pct, or 20 pct, or 15 pct, or 10 pct, or 5 pct, or less than 1 pct relative to an untreated tea extract. Solids separation may include passing the tea extract to a chill tank and cooling it to a temperature of zero to 5°C to accelerate precipitation. The tea extract may be cooled for at least ½ hour, such as at least 1, 2, 3, 6, 9 or 12 hours. Removal of the precipitate may be achieved using a centrifuge though other equipment, such as a filter, may be utilized. Packaging of the tea extract may be in bottles, cans or other suitable containers. The containers may be sterile, but optionally packaging may be performed as a hot filling or sterilization may be achieved as in-pack pasteurization. The pectin lyase treatment, the solids separation and the packaging of the tea extract may be done in a sequential process or with other process steps in between. The process may be a continuous process or a batch process or a combination thereof. Before being consumed the packaged tea beverage may be stored under refrigeration. The present process significantly reduces the development of storage induced haze and/or accelerated storage induced haze in the packaged tea beverage, which otherwise would be induced by such storage, by at least 20 pct, or 50 pct, or 75 pct, or 90 pct, or 95 pct or particularly 99 pct.

According to an embodiment of the first aspect the pectin lyase is immobilized on a solid support. In another embodiment the amount of pectin lyase may be in the range of from 0.1 to 1000000 UPTE per liter of the tea extract, or 1 to 100000 UPTE per liter, or particularly in the range of 10 to 10000 UPTE or more particularly in the range of 1000 to 8000 UPTE per liter.

**Example 1**

A conventional tea extract was produced by extracting green tea leaves (6% w/v) with 75°C hot water for 60 minutes. The tea extract was then processed according to the invention. The tea extract was incubated with stirring at 45°C in a water bath and pectin lyase was added to a final concentration of 4800 UPTE per liter. After 1 hour the enzyme was inactivated by heating to 90°C for 2 minutes. The tea extract was cooled to 5°C and centrifuged at 5.000 rpm (TDL-60B, Shanghai Anting Scientific Equipment Factory) for 10 min. The supernatant was decanted, bottled and sealed. The bottled tea extract was stored at ambient temperature for 3 months (storage stability) or at 45°C for 1 month (accelerated storage stability). In the control treatment without added enzyme activity visual inspection detected haze formed after 1 month at 45°C, as well as after 3 months at 25°C. No haze was observed in the tea extracts treated with pectin lyase.

**Claims**

1. A method for reduction of storage induced haze formation by at least 10 pct, 50 pct, 75 pct, 90 pct, 95 pct or particularly 99 pct in a packaged tea extract by a process comprising subjecting a tea extract to the steps of:

    d) contacting the tea extract with a pectin lyase;
    e) separating insoluble solids from the tea extract; and;
    f) packaging the tea extract

2. The method of claim 1, wherein the pectin lyase is a fungal pectin lyase.

3. The method of any of claims 1-2, wherein the fungal pectin lyase is derivable from *Aspergillus sp., such as A. niger or A.oryzae.*

**EP 1 615 505 B1**

4. The method of any of claims 1-3, wherein the amount of pectin lyase is in the range of from 0.1 to 1000000 UPTE per liter of the tea extract, or 1 to 100000 UPTE per liter, or particularly in the range of 10 to 10000 UPTE or more particularly in the range of 1000 to 8000 UPTE per liter.

5. The method of claim 1 in which the pectin lyase is immobilized on a solid support.

6. Use of a pectin lyase for producing a tea extract with improved storage stability.

**Patentansprüche**

1. Verfahren zur Verminderung einer durch Lagerung induzierten Trübungsbildung um mindestens 10 pct, 50 pct, 75 pct, 90 pct, 95 pct oder insbesondere 99 pct in einem verpackten Teeextrakt durch ein Verfahren, das die Durchführung der folgenden Schritte mit dem Teeextrakt umfasst:

   d) Kontaktieren des Teeextrakts mit einer Pektinlyase;
   e) Abtrennen unlöslicher Feststoffe von dem Teeextrakt; und
   f) Verpacken des Teeextrakts.

2. Verfahren nach Anspruch 1, wobei die Pektinlyase eine Pilz-Pektinlyase ist.

3. Verfahren nach einem der Ansprüche 1 bis 2, wobei die Pilz-Pektinlyase von *Aspergillus sp.,* wie A. *niger* oder A. *oryzae,* ableitbar ist.

4. Verfahren nach einem der Ansprüche 1 bis 3, wobei die Menge der Pektinlyase im Bereich von 0,1 bis 1000000 UPTE pro Liter Teeextrakt oder von 1 bis 100000 UPTE pro Liter oder insbesondere im Bereich von 10 bis 10000 UPTE oder stärker bevorzugt im Bereich von 1000 bis 8000 UPTE pro Liter liegt.

5. Verfahren nach Anspruch 1, wobei die Pektinlyase auf einem festen Träger immobilisiert wird.

6. Verwendung einer Pektinlyase zur Herstellung eines Teeextrakts mit verbesserter Lagerungsbeständigkeit.

**Revendications**

1. Méthode pour réduire la formation de voile induite par le stockage d'au moins 10 pct, 50 pct, 75 pct, 90 pct ou particulièrement 99 pct dans un extrait de thé emballé par un procédé comprenant l'exposition d'un extrait de thé aux étapes de :

   d) mise en contact de l'extrait de thé avec une pectine lyase ;
   e) séparation des solides insolubles de l'extrait de thé ; et ;
   f) emballage de l'extrait de thé.

2. Méthode selon la revendication 1, dans laquelle la pectine lyase est une pectine lyase de champignon.

3. Méthode selon l'une quelconque des revendications 1-2, dans laquelle la pectine lyase de champignon peut être dérivée de *Aspergillus sp., tel que A.niger ou A.oryzae.*

4. Méthode selon l'une quelconque des revendications 1-3, dans laquelle la quantité de pectine lyase est dans la gamme allant de 0,1 à 1 000 000 UPTE par litre de l'extrait de thé, ou de 1 à 100 000 UPTE par litre, ou particulièrement dans la gamme allant de 10 à 10000 UPTE ou plus particulièrement dans la gamme allant de 1 000 à 8 000 UPTE par litre.

5. Méthode selon la revendication 1, dans laquelle la pectine lyase est immobilisée sur un support solide.

6. Utilisation d'une pectine lyase pour produire un extrait de thé ayant une stabilité au stockage améliorée.